# EUROPEAN PATENT SPECIFICATION

(11) **EP 3 334 778 B1**
(45) Date of publication and mention of the grant of the patent: **13.11.2019**
(21) Application number: 16748246.2
(22) Date of filing: 29.07.2016
(51) Int. Cl.: C08K 3/34, C08K 9/06

(54) **POLYURETHANE/UREA SILICON CARBIDE NANOCOMPOSITE**
POLYURETHAN/HARNSTOFF-SILICIUMCARBID-NANOKOMPOSIT
NANOCOMPOSITE DE POLYURÉTHANE/URÉE-CARBURE DE SILICIUM

(30) Priority: 12.08.2015 US 201562204295 P
(43) Date of publication of application: 20.06.2018
(73) Proprietor: 3M Innovative Properties Company, Saint Paul, Minnesota 55133-3427 (US)
(72) Inventor: MARX, Ryan E., Saint Paul, Minnesota 55133-3427 (US); LOMEDA, Jay R., Saint Paul, Minnesota 55133-3427 (US); THOMPSON, Wendy L., Saint Paul, Minnesota 55133-3427 (US); DAMTE, Gezahegn D., Saint Paul, Minnesota 55133-3427 (US); TARBUTTON, Kent, S., Saint Paul, Minnesota 55133-3427 (US); KAYSER, Armin, 87730 Bad Groenenbach (DE)
(74) Representative: Mathys & Squire
(86) International application number: PCT/US2016/044747
(87) International publication number: WO 2017/027231

(56) References cited:
- US-A1- 2011 159 281
- US-A1- 2013 059 987

## Description

### Field of the Disclosure

This disclosure relates to polyurethane/urea nanocomposites which include surface modified silicon carbide nanoparticles dispersed within and covalently bound to a polyurethane/urea polymer.

### Background of the Disclosure

The following references may be relevant to the general field of technology of the present disclosure:
US Pat. No. 6,881,490, issued April 19, 2005; US Pat. No. 7,399,352, issued July 15, 2008; US Pat. No. 8,871,853, issued October 28, 2014; US Pat. No. 8,916,271, issued December 23, 2014;
US Pub. No. 2004/0096663, published May 20, 2004; US Pub. No. 2013/0059987, published March 7, 2013;
US Pub. No. 2011/0159281, published June 30, 2011; US Pub. No. 2011/0309074, published December 22, 2011; US Pub. No. 2012/0071586, published March 22, 2012; US Pub. No. 2012/0244338, published September 27, 2012; and US Pat. Pub. No. 2012/0245253, published September 27, 2012;
Int. Pub. No. WO 2014/117693, published August 7, 2014; and Int. Pub. No. WO 01/05883, published January 25, 2001

### Summary of the Disclosure

The subject-matter of the present invention is defined in claims 1-13 as attached. The present disclosure contains subject-matter not falling under the claims. Briefly, the present disclosure provides polyurethane/urea nanocomposites comprising: a) a polyurethane/urea polymer matrix, and b) surface modified silicon carbide nanoparticles dispersed within and covalently bound to a polyurethane/urea polymer comprising the polyurethane/urea polymer matrix. In some embodiments, the surface modified silicon carbide nanoparticles comprise silicon carbide cores having a number average particle size of between 14.0 and 14.00x10² nanometers (nm). In some embodiments, the silicon carbide cores having a number average particle size of greater than 4.00x10² nanometers (nm) and less than 9.00x10² nanometers (nm). In some embodiments, the polyurethane/urea nanocomposite comprises greater than 52.0% by weight silicon carbide. In some embodiments, the polyurethane/urea polymer comprises a semi-IPN of a crosslinked polyurethane/urea polymer and an uncrosslinked polyurethane/urea polymer, and indeed in some embodiments, the polymer content of the polyurethane/urea polymer matrix consists only of a semi-IPN of a crosslinked polyurethane/urea polymer and an uncrosslinked polyurethane/urea polymer. In some embodiments, the surface modified silicon carbide nanoparticle comprises a silicon carbide core and a linking group derived from a first surface modifying agent, where the linking group is covalently bound to the surface of the silicon carbide core and covalently bound to the polyurethane/urea polymer. In some embodiments, the linking group is derived from a first surface modifying agent according to Formula la:

(R¹O)₃-Si-R²-N=C=O (Ia)

where each R¹ is independently selected from -H, -CH₃, -C₂H₅, -C₃H₇, -C₄H₉, and -C₅H₁₁; and where R² is selected from bivalent aliphatic or aromatic groups having a molecular weight of between 14 and 350 which are unbranched, branched or cyclic, and which are optionally substituted and optionally contain heteroatoms. In some embodiments, the linking group is a moiety according to Formula Ib: 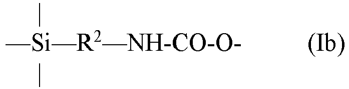 where the urethane group of the linking group is covalently bound to the polyurethane/urea polymer; where each open valence of the silicon atom of the linking group is bound to a hydroxyl group (-OH) or is covalently bound to the surface of the silicon carbide core through an oxygen atom, chosen independently for each open valence; and where R² is selected from bivalent aliphatic or aromatic groups having a molecular weight of between 13 and 350 which are unbranched, branched or cyclic, and which are optionally substituted and optionally contain heteroatoms. In some embodiments, R² is selected from bivalent unbranched aliphatic groups having a molecular weight of less than 90. In some embodiments, the surface modified silicon carbide nanoparticle additionally comprises a second surface modification group derived from a second surface modifying agent, where the second surface modification group is covalently bound to the surface of the silicon carbide core and not covalently bound to the polyurethane/urea polymer, and where the second surface modification group is a moiety according to Formula IIb: 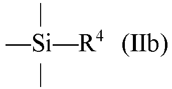 where each open valence of the silicon atom of the second surface modification group is bound to a hydroxyl group (-OH) or is covalently bound to the surface of the silicon carbide core through an oxygen atom, chosen independently for each open valence; and where R⁴ is selected from aliphatic or aromatic groups having a molecular weight of between 13 and 350 which are unbranched, branched or cyclic, and which are optionally substituted and optionally contain heteroatoms. In some embodiments, R⁴ is selected from unbranched aliphatic groups having a molecular weight of less than 90. Additional embodiments of the polyurethane/urea nanocomposite of the present disclosure are described below under "Selected Embodiments."

In another aspect, the present disclosure provides erosion resistant films comprising films of the polyurethane/urea nanocomposite according to the present disclosure. In some embodiments, the erosion resistant film may be bound directly to a substrate. In some embodiments, the erosion resistant film may be bound directly to a layer of an adhesive. In some embodiments, the erosion resistant film may be bound directly to a substrate through an adhesive. In some embodiments, the substrate may be outer surface of an aircraft, which optionally comprises a heating element beneath a surface of the substrate bearing the erosion resistant film, the heating element being capable of heating said surface to a temperature of greater than 0 °C. Additional embodiments of the erosion resistant films of the present disclosure are described below under "Selected Embodiments."

In another aspect, the present disclosure provides precursors to polyurethane/urea nanocomposites comprising: a) a first polyol, and b) surface modified silicon carbide nanoparticles dispersed within the first polyol. In some embodiments, the surface modified silicon carbide nanoparticles comprise silicon carbide cores having a number average particle size of between 14.0 and 14.00x10² nanometers (nm). In some embodiments, the silicon carbide cores having a number average particle size of greater than 4.00x10² nanometers (nm) and less than 9.00x10² nanometers (nm). In some embodiments, the precursor to a polyurethane/urea nanocomposite comprises greater than 70.0% by weight silicon carbide. In some embodiments, the surface modified silicon carbide nanoparticle comprises a silicon carbide core and a linking group derived from a first surface modifying agent, where the linking group is covalently bound to the surface of the silicon carbide core and covalently bound to a second polyol. In some embodiments, the linking group is derived from a first surface modifying agent according to Formula la:

(R¹O)₃-Si-R²-N=C=O (Ia)

where each R¹ is independently selected from -H, -CH₃, -C₂H₅, -C₃H₇, -C₄H₉, and -C₅H₁₁; and where R² is selected from bivalent aliphatic or aromatic groups having a molecular weight of between 14 and 350 which are unbranched, branched or cyclic, and which are optionally substituted and optionally contain heteroatoms. In some embodiments, the the linking group is a moiety according to Formula Ib: 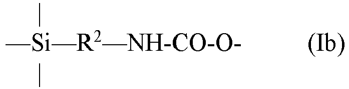 where the urethane group of the linking group is covalently bound to the second polyol;
where each open valence of the silicon atom of the linking group is bound to a hydroxyl group (-OH) or is covalently bound to the surface of the silicon carbide core through an oxygen atom, chosen independently for each open valence; and where R² is selected from bivalent aliphatic or aromatic groups having a molecular weight of between 13 and 350 which are unbranched, branched or cyclic, and which are optionally substituted and optionally contain heteroatoms. In some embodiments, R² is selected from bivalent unbranched aliphatic groups having a molecular weight of less than 90. In some embodiments, the surface modified silicon carbide nanoparticle additionally comprises a second surface modification group derived from a second surface modifying agent, where the second surface modification group is covalently bound to the surface of the silicon carbide core and not covalently bound to any polyol, and where the second surface modification group is a moiety according to Formula IIb: 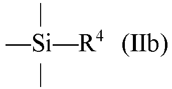 where each open valence of the silicon atom of the second surface modification group is bound to a hydroxyl group (-OH) or is covalently bound to the surface of the silicon carbide core through an oxygen atom, chosen independently for each open valence; and
where R⁴ is selected from aliphatic or aromatic groups having a molecular weight of between 13 and 350 which are unbranched, branched or cyclic, and which are optionally substituted and optionally contain heteroatoms. In some embodiments, R⁴ is selected from unbranched aliphatic groups having a molecular weight of less than 90. In some embodiments, the second polyol has an average molecular weight of greater than 350 and less than 3500 and is selected from the group consisting of: polyether polyols, polycaprolactone polyols, polyester polyols, and polybutadiene based polyols such as polybutadienes endcapped with ethylene oxide. In some embodiments, the second polyol is selected from the group consisting of: polyether polyols. In some embodiments, the second polyol is the same polyol as the first polyol. This is thought to aid in compatibilizing of the surface modified silicon carbide nanoparticles with the first polyol. In some embodiments, the second polyol is a different polyol from the first polyol. In some embodiments, the first polyol has an average molecular weight of greater than 350 and less than 3500 and where the second polyol is selected from the group consisting of: polyether polyols, polycaprolactone polyols, polyester polyols, and polybutadiene based polyols such as polybutadienes endcapped with ethylene oxide. Additional embodiments of the precursor to a polyurethane/urea nanocomposite of the present disclosure are described below under "Selected Embodiments."

In another aspect, the present disclosure provides a precursor to a polyurethane/urea nanocomposite additionally comprising a polyisocyanate dispersed within the first polyol. In some embodiments, the precursor to a polyurethane/urea nanocomposite additionally comprises a polyurethane/urea polymer which includes crosslinkable acrylate groups dispersed within the first polyol. Additional embodiments of the precursor to a polyurethane/urea nanocomposite of the present disclosure are described below under "Selected Embodiments."

In another aspect, the present disclosure provides methods of making polyurethane/urea nanocomposites, in some embodiments comprising the steps of: f) providing a precursor to a polyurethane/urea nanocomposite additionally comprising a polyisocyanate and g) reacting the polyisocyanate with the polyols in the precursor to form a polyurethane/urea nanocomposite. In some embodiments, such methods include applying the precursor to a polyurethane/urea nanocomposite to a surface and thereafter reacting the polyisocyanate with the polyols in the precursor to form a polyurethane/urea nanocomposite. In some embodiments, the step of applying a precursor to a polyurethane/urea nanocomposite to a surface comprises spraying, brushing, or the like. Additional embodiments of the methods of the present disclosure are described below under "Selected Embodiments."

In another aspect, the present disclosure provides polyurethane/urea nanocomposites additionally comprising a polyurethane/urea polymer which includes crosslinkable acrylate groups dispersed within the nanocomposite and methods of making cured articles therefrom, typically by crosslinking the crosslinkable acrylate groups, in some embodiments by application of radiations such as UV or e-beam radiation. In some embodiments such methods additionally comprise the step of shaping the polyurethane/urea nanocomposite prior to crosslinking, such as shaping into a film, which in some embodiments may bear a repeating pattern of ridges, elevations, indentations, or the like. Additional embodiments of the polyurethane/urea nanocomposites, cured articles and methods of the present disclosure are described below under "Selected Embodiments."

All scientific and technical terms used herein have meanings commonly used in the art unless otherwise specified.

As used in this specification and the appended claims, "polyurethane/urea polymer" means a polymer wherein monomer units or oligomeric units of the polymer are joined along the polymer backbone by urethane linkages, urea linkages, or a combination of both. It will be understood that the following embodiments of polyurethane/urea polymer and all combinations thereof are each individually subsumed in the term "polyurethane/urea polymer" throughout the present specification. In some embodiments, monomer units or oligomeric units of the polymer are joined along the polymer backbone by urethane linkages and no urea linkages, in which case the polyurethane/urea polymer may optionally be designated a polyurethane polymer. In some embodiments, monomer units or oligomeric units of the polymer are joined along the polymer backbone by urea linkages and no urethane linkages, in which case the polyurethane/urea polymer may optionally be designated a polyurea polymer. In some embodiments, monomer units or oligomeric units of the polymer are joined along the polymer backbone by urethane linkages and urea linkages, in which case the polyurethane/urea polymer may optionally be designated a mixed polyurethane/polyurea polymer. In some embodiments, oligomeric units of the polyurethane/urea polymer, derived from oligomers of monomers joined along the oligomer backbone by linkages other than urethane or urea linkages, are joined along the polymer backbone by urethane and/or urea linkages. In some embodiments, no oligomeric units derived from oligomers of monomers joined along the oligomer backbone by linkages other than urethane or urea linkages are included in the polyurethane/urea polymer. In some embodiments, no oligomeric units derived from oligomers of monomers joined along the oligomer backbone by linkages other than urethane and/or urea linkages are included in the polyurethane/urea polymer backbone. In some embodiments, more than 55% of backbone linkages between monomer units or oligomeric units of the polymer are urethane linkages; in some embodiments more than 65%; in some embodiments more than 75%; in some embodiments more than 85%; in some embodiments more than 95%; and in some embodiments more than 98%. In some embodiments, more than 55% of backbone linkages between monomer units of the polymer are urethane linkages; in some embodiments more than 65%; in some embodiments more than 75%; in some embodiments more than 85%; in some embodiments more than 95%; and in some embodiments more than 98%. In some embodiments, more than 55% of backbone linkages between monomer units or oligomeric units of the polymer are urea linkages; in some embodiments more than 65%; in some embodiments more than 75%; in some embodiments more than 85%; in some embodiments more than 95%; and in some embodiments more than 98%. In some embodiments, more than 55% of backbone linkages between monomer units of the polymer are urea linkages; in some embodiments more than 65%; in some embodiments more than 75%; in some embodiments more than 85%; in some embodiments more than 95%; and in some embodiments more than 98%.

As used in this specification and the appended claims, the "substituted" means, for a chemical species, group or moiety, substituted by conventional substituents which do not interfere with the desired product or process, e.g., substituents can be alkyl, alkoxy, aryl, phenyl, halo (F, Cl, Br, I), cyano, nitro, etc.

As used in this specification and the appended claims, the term "bound directly" refers to materials which are in direct contact with each other and bound together with no other material intermediating.

As used in this specification and the appended claims, the singular forms "a", "an", and "the" encompass embodiments having plural referents, unless the content clearly dictates otherwise.

As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to." It will be understood that the terms "consisting of' and "consisting essentially of' are subsumed in the term "comprising," and the like.

It is an advantage of the present disclosure to provide, in some embodiments, a surfacing film demonstrating both high erosion resistance and high thermal conductivity, which may be useful for protection of aircraft surfaces, and in particular surfaces served by de-icing heaters.

### Brief Description of the Drawing

FIG. 1A is photograph of a film according to the present disclosure taken after 20 minutes of exposure to rain erosion testing, as described in the Examples section herein.
FIG. 1B is photograph of a film according to the present disclosure taken after exposure to rain erosion testing until failure at 51 minutes, as described in the Examples section herein.
FIG. 2A is photograph of a comparative film taken after 20 minutes of exposure to rain erosion testing, as described in the Examples section herein.
FIG. 2B is photograph of a comparative film taken after exposure to rain erosion testing until failure at 31 minutes, as described in the Examples section herein.

### Detailed Description

This disclosure relates to polyurethane/urea nanocomposites which include surface modified silicon carbide nanoparticles dispersed within and covalently bound to a polyurethane/urea polymer. In addition, this disclosure relates to a precursors to polyurethane/urea nanocomposites which include surface modified silicon carbide nanoparticles dispersed within a first and covalently bound to a second polyol, which may be the same or a different polyol. The surface treatment allows the silicon carbide nanoparticles to be well compatibilized and dispersed in the first polyol. Use of this polyol based precursor to make a polyurethane/urea results in a polyurethane/urea nanocomposite which includes well dispersed and covalently bound silicon carbide nanoparticles. The surface treatment enables unusually high loadings of silicon carbide, in some embodiments without a large increase in viscosity. The surface treatment enables bulk polymerization of the polyurethane/urea nanocomposite.

The present disclosure additionally provides films comprising the polyurethane/urea nanocomposites of the present disclosure. The present disclosure additionally provides methods of using such films as erosion resistant covering layers or coatings, such as may be used on leading edges of helicopter rotor blades, wind turbine blades, fixed wing aircraft, or the like. Applicants have found that embodiments of the present polyurethane/urea nanocomposites including surface modified silicon carbide nanoparticles demonstrate high strength, high thermal conductivity, high resistance to sand erosion, and high resistance to rain erosion; a combination that is particularly useful for erosion resistant films used on leading edges of helicopter rotor blades, wind turbine blades, fixed wing aircraft, or the like.

Any suitable polyurethane/urea may be used in the practice of the present disclosure. In some embodiments, one or more polyurethane/ureas comprise an acrylate component; in some embodiments, an acrylate component capable of crosslinking. In some embodiments, the polyurethane/urea comprises an acrylate component capable of radiation-induced crosslinking with application of ebeam or EM radiation such as UV radiation. In some embodiments, the polyurethane/urea comprises no acrylate component.

Any suitable silicon carbide particles may be used in the practice of the present disclosure. In some embodiments, the silicon carbide particles used exhibit a multimodal size distribution as described in U.S. Pub. No. 2012/0309870, published December 6, 2012.

The silicon carbide nanoparticles may be surface modified by reaction with surface-modifying compounds having one or more functional groups capable of covalently bonding to silicon carbide and one or more functional groups capable of incorporation into a polyurethane/urea polymer, thus providing covalent bonding of the silicon carbide particles to the polyurethane/urea polymer. Most typically, the functional groups capable of covalently bonding to silicon carbide are silane groups. Most typically, the functional groups capable of incorporation into a polyurethane/urea polymer are hydroxy groups, but may also be amine groups. In some embodiments, the surface-modifying compound additionally aids in dispersal of the silicon carbide nanoparticles in one component of the polyurethane/urea prior to polymerization, typically the polyol component. In some embodiments, the surface-modifying compound is a polyol comprising a silane group. In some embodiments, the surface-modifying compound is a polyol to which a silane group is added by reaction with a compound comprising a silane (or silane-generating) group and an isocyanate group. The polyol that forms a part of the surface-modifying compound may be the same or different as a polyol used in the polyurethane. In some embodiments, the polyol that forms a part of the surface-modifying compound is different from the polyol used in the polyurethane. In some embodiments, at least one polyol that forms a part of the surface-modifying compound is the same as at least one polyol used in the polyurethane. In some embodiments, the polyol or polyols that form a part of the surface-modifying compound are the same as at least some of the polyols used in the polyurethane. In some embodiments, the polyol or polyols used in the polyurethane/urea are the same as at least some of the polyols that form a part of the surface-modifying compound. In some embodiments, the polyol or polyols that form a part of the surface-modifying compound are the same as the polyol or polyols used in the polyurethane. In some embodiments, an additional silane may be added to occupy additional binding sites on the silicon carbide particle.

In various embodiments, the polyurethane/urea nanocomposite materials may be applied as a sheet, tape, boot, co-curable film layer, or a spray. In some embodiments, the polyurethane/urea nanocomposite materials may be applied as a reactive mixture by mixing a the polyol polyurethane/urea precursor having dispersed therein surface modified silicon carbide nanoparticles with a isocyanate polyurethane/urea precursor and applying by spraying, brushing, immersion or the like, followed by cure. In some embodiments, cured polyurethane/urea nanocomposite materials may be applied in the form of sheets, tapes, boots, or the like, with or without adhesive layers such as pressure sensitive adhesives or curable adhesives. In some embodiments, the polyurethane/urea nanocomposite may be used as erosion resistant covering layers or coatings. In some embodiments, the polyurethane/urea nanocomposite may be used as erosion resistant covering layers or coatings on leading edges of helicopter rotor blades, wind turbine blades or fixed wing aircraft.

### Selected Embodiments

The following embodiments, designated by letter and number, are intended to further illustrate the present disclosure but should not be construed to unduly limit this disclosure.
N1. A polyurethane/urea nanocomposite comprising:
   a) a polyurethane/urea polymer matrix, and
   b) surface modified silicon carbide nanoparticles dispersed within and covalently bound to a polyurethane/urea polymer comprising the polyurethane/urea polymer matrix.
N2. The polyurethane/urea nanocomposite according to any of the preceding embodiments wherein the surface modified silicon carbide nanoparticles comprise silicon carbide cores having a number average particle size of between 14.0 and 14.00x10² nanometers (nm).
N3. The polyurethane/urea nanocomposite according to any of the preceding embodiments wherein the surface modified silicon carbide nanoparticles comprise silicon carbide cores having a number average particle size of greater than 55.0 nanometers (nm).
N4. The polyurethane/urea nanocomposite according to any of the preceding embodiments wherein the surface modified silicon carbide nanoparticles comprise silicon carbide cores having a number average particle size of greater than 155.0 nanometers (nm).
N5. The polyurethane/urea nanocomposite according to any of the preceding embodiments wherein the surface modified silicon carbide nanoparticles comprise silicon carbide cores having a number average particle size of greater than 4.00x10² nanometers (nm).
N6. The polyurethane/urea nanocomposite according to any of the preceding embodiments wherein the surface modified silicon carbide nanoparticles comprise silicon carbide cores having a number average particle size of greater than 6.00x10² nanometers (nm).
N7. The polyurethane/urea nanocomposite according to any of the preceding embodiments wherein the surface modified silicon carbide nanoparticles comprise silicon carbide cores having a number average particle size of less than 11.00x10² nanometers (nm).
N8. The polyurethane/urea nanocomposite according to any of the preceding embodiments wherein the surface modified silicon carbide nanoparticles comprise silicon carbide cores having a number average particle size of less than 9.00x10² nanometers (nm).
N9. The polyurethane/urea nanocomposite according to any of the preceding embodiments comprising greater than 12.0% by weight silicon carbide.
N10. The polyurethane/urea nanocomposite according to any of the preceding embodiments comprising greater than 18.0% by weight silicon carbide.
N11. The polyurethane/urea nanocomposite according to any of the preceding embodiments comprising greater than 32.0% by weight silicon carbide.
N12. The polyurethane/urea nanocomposite according to any of the preceding embodiments comprising greater than 42.0% by weight silicon carbide.
N13. The polyurethane/urea nanocomposite according to any of the preceding embodiments comprising greater than 47.0% by weight silicon carbide.
N14. The polyurethane/urea nanocomposite according to any of the preceding embodiments comprising greater than 52.0% by weight silicon carbide.
N15. The polyurethane/urea nanocomposite according to any of the preceding embodiments comprising greater than 54.0% by weight silicon carbide.
N16. The polyurethane/urea nanocomposite according to any of the preceding embodiments comprising less than 80.0% by weight silicon carbide.
N17. The polyurethane/urea nanocomposite according to any of the preceding embodiments comprising less than 68.0% by weight silicon carbide.
N18. The polyurethane/urea nanocomposite according to any of the preceding embodiments comprising less than 58.0% by weight silicon carbide.
N19. The polyurethane/urea nanocomposite according to any of the preceding embodiments wherein the polyurethane/urea polymer comprises an uncrosslinked polyurethane/urea polymer.
N20. The polyurethane/urea nanocomposite according to any of the preceding embodiments wherein the polymer content of the polyurethane/urea polymer matrix consists of an uncrosslinked polyurethane/urea polymer.
N21. The polyurethane/urea nanocomposite according to any of the preceding embodiments wherein the polyurethane/urea polymer comprises a thermoplastic polyurethane/urea polymer.
N22. The polyurethane/urea nanocomposite according to any of the preceding embodiments wherein the polymer content of the polyurethane/urea polymer matrix consists of a thermoplastic polyurethane/urea polymer.
N23. The polyurethane/urea nanocomposite according to any of embodiments N1-N19 and N21 wherein the polyurethane/urea polymer comprises a crosslinked polyurethane/urea polymer.
N24. The polyurethane/urea nanocomposite according to any of embodiments N1-N18 wherein the polymer content of the polyurethane/urea polymer matrix consists of a crosslinked polyurethane/urea polymer.
N25. The polyurethane/urea nanocomposite according to any of embodiments N1-N19 and N21 wherein the polyurethane/urea polymer comprises a semi-IPN of a crosslinked polyurethane/urea polymer and an uncrosslinked polyurethane/urea polymer.
N26. The polyurethane/urea nanocomposite according to any of embodiments N1-N18 wherein the polymer content of the polyurethane/urea polymer matrix consists of a semi-IPN of a crosslinked polyurethane/urea polymer and an uncrosslinked polyurethane/urea polymer.
N27. The polyurethane/urea nanocomposite according to any of embodiments N23-N26 wherein the crosslinked polyurethane/urea polymer comprises crosslinks derived from curable acrylate groups.
N28. The polyurethane/urea nanocomposite according to any of the preceding embodiments wherein the polyurethane/urea polymer comprises a polyurethane polymer.
N29. The polyurethane/urea nanocomposite according to any of the preceding embodiments wherein the polyurethane/urea polymer comprises a polyurea polymer.
N30. The polyurethane/urea nanocomposite according to any of the preceding embodiments wherein the polyurethane/urea polymer comprises a mixed polyurethane/polyurea polymer.
N31. The polyurethane/urea nanocomposite according to any of the preceding embodiments wherein the polyurethane/urea polymer comprises no oligomeric units derived from oligomers of monomers joined along the oligomer backbone by linkages other than urethane or urea linkages.
N32. The polyurethane/urea nanocomposite according to any of the preceding embodiments wherein no oligomeric units derived from oligomers of monomers joined along the oligomer backbone by linkages other than urethane or urea linkages are included in the polyurethane/urea polymer backbone.
N33. The polyurethane/urea nanocomposite according to any of the preceding embodiments wherein more than 55% of backbone linkages between monomer units or oligomeric units of the polyurethane/urea polymer are urethane linkages.
N34. The polyurethane/urea nanocomposite according to any of the preceding embodiments wherein more than 55% of backbone linkages between monomer units of the polyurethane/urea polymer are urethane linkages.
N35. The polyurethane/urea nanocomposite according to any of the preceding embodiments wherein more than 95% of backbone linkages between monomer units or oligomeric units of the polyurethane/urea polymer are urethane linkages.
N36. The polyurethane/urea nanocomposite according to any of the preceding embodiments wherein more than 95% of backbone linkages between monomer units of the polyurethane/urea polymer are urethane linkages.
N37. The polyurethane/urea nanocomposite according to any of embodiments N1-N27 wherein the polymer content of the polyurethane/urea polymer matrix consists of polyurethane polymers.
N38. The polyurethane/urea nanocomposite according to any of embodiments N1-N27 wherein the polymer content of the polyurethane/urea polymer matrix consists of polyurea polymers.
N39. The polyurethane/urea nanocomposite according to any of embodiments N1-N27 wherein the polymer content of the polyurethane/urea polymer matrix consists of mixed polyurethane/polyurea polymers.
N40. The polyurethane/urea nanocomposite according to any of embodiments N1-N30 wherein the polymer content of the polyurethane/urea polymer matrix consists of polyurethane/urea polymers comprising no oligomeric units derived from oligomers of monomers joined along the oligomer backbone by linkages other than urethane or urea linkages.
N41. The polyurethane/urea nanocomposite according to any of embodiments N1-N30 wherein the polymer content of the polyurethane/urea polymer matrix consists of polyurethane/urea polymers comprising no oligomeric units derived from oligomers of monomers joined along the oligomer backbone by linkages other than urethane or urea linkages are included in the polyurethane/urea polymer backbone.
N42. The polyurethane/urea nanocomposite according to any of embodiments N1-N32 wherein the polymer content of the polyurethane/urea polymer matrix consists of polyurethane/urea polymers wherein more than 55% of backbone linkages between monomer units or oligomeric units of the polyurethane/urea polymer are urethane linkages.
N43. The polyurethane/urea nanocomposite according to any of embodiments N1-N32 wherein the polymer content of the polyurethane/urea polymer matrix consists of polyurethane/urea polymers wherein more than 55% of backbone linkages between monomer units of the polyurethane/urea polymer are urethane linkages.
N44. The polyurethane/urea nanocomposite according to any of embodiments N1-N32 wherein the polymer content of the polyurethane/urea polymer matrix consists of polyurethane/urea polymers wherein more than 95% of backbone linkages between monomer units or oligomeric units of the polyurethane/urea polymer are urethane linkages.
N45. The polyurethane/urea nanocomposite according to any of embodiments N1-N32 wherein the polymer content of the polyurethane/urea polymer matrix consists of polyurethane/urea polymers wherein more than 95% of backbone linkages between monomer units of the polyurethane/urea polymer are urethane linkages.
S1. The polyurethane/urea nanocomposite according to any of embodiments N1-N45 wherein the surface modified silicon carbide nanoparticle comprises a silicon carbide core and a linking group derived from a first surface modifying agent, wherein the linking group is covalently bound to the surface of the silicon carbide core and covalently bound to the polyurethane/urea polymer.
S2. The polyurethane/urea nanocomposite according to embodiment S 1 wherein the linking group is derived from a first surface modifying agent according to Formula la:

   (R¹O)₃-Si-R²-N=C=O (Ia)

   wherein each R¹ is independently selected from -H, -CH₃, -C₂H₅, -C₃H₇, -C₄H₉, and -C₅H₁₁; and
   wherein R² is selected from bivalent aliphatic or aromatic groups having a molecular weight of between 14 and 350 which are unbranched, branched or cyclic, and which are optionally substituted and optionally contain heteroatoms.
S3. The polyurethane/urea nanocomposite according to embodiment S2 wherein each R¹ is independently selected from -H, -CH₃, and -C₂H₅.
S4. The polyurethane/urea nanocomposite according to embodiment S2 wherein each R¹ is independently selected from -CH₃, and -C₂H₅.
S5. The polyurethane/urea nanocomposite according to embodiment S2 wherein each R¹ is -CH₃.
S6. The polyurethane/urea nanocomposite according to embodiment S2 wherein each R¹ is -C₂H₅.
S7. The polyurethane/urea nanocomposite according to any of embodiments S1-S2 wherein the linking group is a moiety according to Formula Ib: 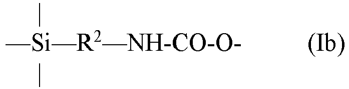 wherein the urethane group of the linking group is covalently bound to the polyurethane/urea polymer;
   wherein each open valence of the silicon atom of the linking group is bound to a hydroxyl group (-OH) or is covalently bound to the surface of the silicon carbide core through an oxygen atom, chosen independently for each open valence; and
   wherein R² is selected from bivalent aliphatic or aromatic groups having a molecular weight of between 13 and 350 which are unbranched, branched or cyclic, and which are optionally substituted and optionally contain heteroatoms.
S8. The polyurethane/urea nanocomposite according to any of embodiments S1-S7 wherein R² is selected from bivalent aliphatic groups.
S9. The polyurethane/urea nanocomposite according to any of embodiments S1-S7 wherein R² is selected from bivalent aromatic groups.
S10. The polyurethane/urea nanocomposite according to any of embodiments S1-S8 wherein R² is selected from bivalent unbranched groups.
S11. The polyurethane/urea nanocomposite according to any of embodiments S1-S8 wherein R² is selected from bivalent branched groups.
S12. The polyurethane/urea nanocomposite according to any of embodiments S1-S9 wherein R² is selected from bivalent cyclic groups.
S13. The polyurethane/urea nanocomposite according to any of embodiments S1-S12 wherein R² is selected from bivalent groups which contain heteroatoms.
S14. The polyurethane/urea nanocomposite according to any of embodiments S1-S12 wherein R² is selected from bivalent groups which contain no heteroatoms.
S15. The polyurethane/urea nanocomposite according to any of embodiments S1-S14 wherein R² is selected from bivalent groups which are substituted.
S16. The polyurethane/urea nanocomposite according to any of embodiments S1-S14 wherein R² is selected from bivalent groups which are not substituted.
S17. The polyurethane/urea nanocomposite according to any of embodiments S1-S16 wherein R² is selected from bivalent groups having a molecular weight of greater than 27.
S18. The polyurethane/urea nanocomposite according to any of embodiments S1-S16 wherein R² is selected from bivalent groups having a molecular weight of greater than 41.
S19. The polyurethane/urea nanocomposite according to any of embodiments S1-S18 wherein R² is selected from bivalent groups having a molecular weight of less than 290.
S20. The polyurethane/urea nanocomposite according to any of embodiments S1-S18 wherein R² is selected from bivalent groups having a molecular weight of less than 190.
S21. The polyurethane/urea nanocomposite according to any of embodiments S1-S18 wherein R² is selected from bivalent groups having a molecular weight of less than 140.
S22. The polyurethane/urea nanocomposite according to any of embodiments S1-S18 wherein R² is selected from bivalent groups having a molecular weight of less than 90.
S23. The polyurethane/urea nanocomposite according to any of embodiments S1-S18 wherein R² is selected from bivalent groups having a molecular weight of less than 74.
S24. The polyurethane/urea nanocomposite according to any of embodiments S1-S18 wherein R² is selected from bivalent groups having a molecular weight of less than 58.
S25. The polyurethane/urea nanocomposite according to any of embodiments S1-S18 wherein R² is selected from bivalent groups having a molecular weight of less than 44.
SS1. The polyurethane/urea nanocomposite according to any of embodiments S1-S25 wherein the surface modified silicon carbide nanoparticle additionally comprises a second surface modification group derived from a second surface modifying agent, wherein the second surface modification group is covalently bound to the surface of the silicon carbide core and not covalently bound to the polyurethane/urea polymer.
SS2. The polyurethane/urea nanocomposite according to embodiment SS1 wherein the second surface modification group is derived from a second surface modifying agent according to Formula IIa:

   (R³O)₃-Si-R⁴ (IIa)

   wherein each R³ is independently selected from -H, -CH₃, -C₂H₅, -C₃H₇, -C₄H₉, and -C₅H₁₁; and
   wherein R⁴ is selected from aliphatic or aromatic groups having a molecular weight of between 14 and 350 which are unbranched, branched or cyclic, and which are optionally substituted and optionally contain heteroatoms.
SS3. The polyurethane/urea nanocomposite according to embodiment SS2 wherein each R³ is independently selected from -H, -CH₃, and -C₂H₅.
SS4. The polyurethane/urea nanocomposite according to embodiment SS2 wherein each R³ is independently selected from -CH₃, and -C₂H₅.
SS5. The polyurethane/urea nanocomposite according to embodiment SS2 wherein each R³ is -CH₃.
SS6. The polyurethane/urea nanocomposite according to embodiment SS2 wherein each R³ is -C₂H₅.
SS7. The polyurethane/urea nanocomposite according to any of embodiments SS1-SS2 wherein the second surface modification group is a moiety according to Formula IIb: 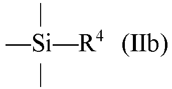
   wherein each open valence of the silicon atom of the second surface modification group is bound to a hydroxyl group (-OH) or is covalently bound to the surface of the silicon carbide core through an oxygen atom, chosen independently for each open valence; and
   wherein R⁴ is selected from aliphatic or aromatic groups having a molecular weight of between 13 and 350 which are unbranched, branched or cyclic, and which are optionally substituted and optionally contain heteroatoms.
SS8. The polyurethane/urea nanocomposite according to any of embodiments SS1-SS7 wherein R⁴ is selected from aliphatic groups.
SS9. The polyurethane/urea nanocomposite according to any of embodiments SS1-SS7 wherein R⁴ is selected from aromatic groups.
SS10. The polyurethane/urea nanocomposite according to any of embodiments SS1-SS8 wherein R⁴ is selected from unbranched groups.
SS11. The polyurethane/urea nanocomposite according to any of embodiments SS1-SS8 wherein R⁴ is selected from branched groups.
SS12. The polyurethane/urea nanocomposite according to any of embodiments SS1-SS9 wherein R⁴ is selected from cyclic groups.
SS13. The polyurethane/urea nanocomposite according to any of embodiments SS1-SS12 wherein R⁴ is selected from groups which contain heteroatoms.
SS14. The polyurethane/urea nanocomposite according to any of embodiments SS1-SS12 wherein R⁴ is selected from groups which contain no heteroatoms.
SS15. The polyurethane/urea nanocomposite according to any of embodiments SS1-SS14 wherein R⁴ is selected from groups which are substituted.
SS16. The polyurethane/urea nanocomposite according to any of embodiments SS1-SS14 wherein R⁴ is selected from groups which are not substituted.
SS17. The polyurethane/urea nanocomposite according to any of embodiments SS1-SS16 wherein R⁴ is selected from groups having a molecular weight of greater than 27.
SS18. The polyurethane/urea nanocomposite according to any of embodiments SS1-SS16 wherein R⁴ is selected from groups having a molecular weight of greater than 41.
SS19. The polyurethane/urea nanocomposite according to any of embodiments SS1-SS18 wherein R⁴ is selected from groups having a molecular weight of less than 290.
SS20. The polyurethane/urea nanocomposite according to any of embodiments SS1-SS18 wherein R⁴ is selected from groups having a molecular weight of less than 190.
SS21. The polyurethane/urea nanocomposite according to any of embodiments SS1-SS18 wherein R⁴ is selected from groups having a molecular weight of less than 140.
SS22. The polyurethane/urea nanocomposite according to any of embodiments SS1-SS18 wherein R⁴ is selected from groups having a molecular weight of less than 90.
SS23. The polyurethane/urea nanocomposite according to any of embodiments SS1-SS18 wherein R⁴ is selected from groups having a molecular weight of less than 74.
SS24. The polyurethane/urea nanocomposite according to any of embodiments SS1-SS18 wherein R⁴ is selected from groups having a molecular weight of less than 58.
SS25. The polyurethane/urea nanocomposite according to any of embodiments SS1-SS18 wherein R⁴ is selected from groups having a molecular weight of less than 44.
F1. An erosion resistant film consisting of a film of the polyurethane/urea nanocomposite according to any of embodiments N1-N45, S1-S25 or SS1-SS25.
F2. An erosion resistant film consisting of a film of the polyurethane/urea nanocomposite according to any of embodiments N1-N45, S1-S25 or SS1-SS25 bound directly to a layer of an adhesive.
F3. An erosion resistant film consisting of a film of the polyurethane/urea nanocomposite according to any of embodiments N1-N45, S1-S25 or SS1-SS25 bound directly to a layer of an adhesive primer which is bound directly to a layer of an adhesive.
F4. An erosion resistant film comprising a film consisting of the polyurethane/urea nanocomposite according to any of embodiments N1-N45, S1-S25 or SS1-SS25.
F5. An erosion resistant film comprising of a film consisting of the polyurethane/urea nanocomposite according to any of embodiments N1-N45, S1-S25 or SS1-SS25 bound directly to a layer of an adhesive.
F6. An erosion resistant film comprising a film consisting of the polyurethane/urea nanocomposite according to any of embodiments N1-N45, S1-S25 or SS1-SS25 bound directly to a layer of an adhesive primer which is bound directly to a layers of an adhesive.
F7. An erosion resistant film comprising a film comprising the polyurethane/urea nanocomposite according to any of embodiments N1-N45, S1-S25 or SS1-SS25.
F8. An erosion resistant film comprising a film comprising the polyurethane/urea nanocomposite according to any of embodiments N1-N45, S1-S25 or SS1-SS25 bound directly to a layer of an adhesive.
F9. An erosion resistant film comprising a film comprising the polyurethane/urea nanocomposite according to any of embodiments N1-N45, S1-S25 or SS1-SS25 bound directly to a layer of an adhesive primer which is bound directly to a layer of an adhesive.
F10. An erosion resistant film comprising of a film consisting of the polyurethane/urea nanocomposite according to any of embodiments N1-N45, S1-S25 or SS1-SS25 and a layer of an adhesive.
F11. An erosion resistant film comprising of a film comprising the polyurethane/urea nanocomposite according to any of embodiments N1-N45, S1-S25 or SS1-SS25 and a layer of an adhesive.
F12. An erosion resistant film according to any of embodiments F1-F11 bound to a substrate.
F13. An erosion resistant film according to any of embodiments F1-F11 bound directly to a substrate.
F14. An erosion resistant film according to any of embodiments F2, F3, F5, F6 or F8-F11 bound directly to a substrate through said adhesive.
F15. The erosion resistant film according to any of embodiments F12-F14 wherein said substrate is metal.
F16. The erosion resistant film according to any of embodiments F12-F14 wherein said substrate is fiber-resin matrix composite.
F17. The erosion resistant film according to any of embodiments F12-F16 wherein said substrate is an outer surface of an aircraft.
F18. The erosion resistant film according to any of embodiments F12-F16 wherein said substrate is an outer surface of an aerofoil.
F19. The erosion resistant film according to any of embodiments F12-F18 wherein said substrate comprises a heating element beneath a surface of the substrate bearing the erosion resistant film, the heating element being capable of heating said surface to a temperature of greater than 0 °C.
F20. The erosion resistant film according to any of embodiments F12-F18 wherein said substrate comprises a heating element beneath a surface of the substrate bearing the erosion resistant film, the heating element being capable of heating said surface to a temperature of greater than 5 °C.
F21. The erosion resistant film according to any of embodiments F12-F20 wherein said substrate includes an uppermost layer of paint.
F22. The erosion resistant film according to any of embodiments F12-F20 wherein said substrate includes an uppermost layer of primer.
P1. A precursor to a polyurethane/urea nanocomposite comprising:
   a) a first polyol, and
   b) surface modified silicon carbide nanoparticles dispersed within the first polyol.
P2. The precursor to a polyurethane/urea nanocomposite according to embodiment P1 wherein the surface modified silicon carbide nanoparticles comprise silicon carbide cores having a number average particle size of between 14.0 and 14.00x10² nanometers (nm).
P3. The precursor to a polyurethane/urea nanocomposite according to any of embodiments P1-P2 wherein the surface modified silicon carbide nanoparticles comprise silicon carbide cores having a number average particle size of greater than 55.0 nanometers (nm).
P4. The precursor to a polyurethane/urea nanocomposite according to any of embodiments P1-P2 wherein the surface modified silicon carbide nanoparticles comprise silicon carbide cores having a number average particle size of greater than 155.0 nanometers (nm).
P5. The precursor to a polyurethane/urea nanocomposite according to any of embodiments P1-P2 wherein the surface modified silicon carbide nanoparticles comprise silicon carbide cores having a number average particle size of greater than 4.00x10² nanometers (nm).
P6. The precursor to a polyurethane/urea nanocomposite according to any of embodiments P1-P2 wherein the surface modified silicon carbide nanoparticles comprise silicon carbide cores having a number average particle size of greater than 6.00x10² nanometers (nm).
P7. The precursor to a polyurethane/urea nanocomposite according to any of embodiments P1-P6 wherein the surface modified silicon carbide nanoparticles comprise silicon carbide cores having a number average particle size of less than 11.00x10² nanometers (nm).
P8. The precursor to a polyurethane/urea nanocomposite according to any of embodiments P1-P6 wherein the surface modified silicon carbide nanoparticles comprise silicon carbide cores having a number average particle size of less than 9.00x10² nanometers (nm).
P9. The precursor to a polyurethane/urea nanocomposite according to any of embodiments P1-P8 comprising greater than 18.0% by weight silicon carbide.
P10. The precursor to a polyurethane/urea nanocomposite according to any of embodiments P1-P8 comprising greater than 27.0% by weight silicon carbide.
P11. The precursor to a polyurethane/urea nanocomposite according to any of embodiments P1-P8 comprising greater than 48.0% by weight silicon carbide.
P12. The precursor to a polyurethane/urea nanocomposite according to any of embodiments P1-P8 comprising greater than 63.0% by weight silicon carbide.
P13. The precursor to a polyurethane/urea nanocomposite according to any of embodiments P1-P8 comprising greater than 70.0% by weight silicon carbide.
P14. The precursor to a polyurethane/urea nanocomposite according to any of embodiments P1-P8 comprising greater than 76.0% by weight silicon carbide.
P15. The precursor to a polyurethane/urea nanocomposite according to any of embodiments P1-P14 comprising less than 90.0% by weight silicon carbide.
P16. The precursor to a polyurethane/urea nanocomposite according to any of embodiments P1-P14 comprising less than 80.0% by weight silicon carbide.
PS1. The precursor to a polyurethane/urea nanocomposite according to any of embodiments P1-P16 wherein the surface modified silicon carbide nanoparticle comprises a silicon carbide core and a linking group derived from a first surface modifying agent, wherein the linking group is covalently bound to the surface of the silicon carbide core and covalently bound to a second polyol.
PS2. The precursor to a polyurethane/urea nanocomposite according to embodiment PS1 wherein the linking group is derived from a first surface modifying agent according to Formula la:

   (R¹O)₃-Si-R²-N=C=O (Ia)

   wherein each R¹ is independently selected from -H, -CH₃, -C₂H₅, -C₃H₇, -C₄H₉, and -C₅H₁₁; and
   wherein R² is selected from bivalent aliphatic or aromatic groups having a molecular weight of between 14 and 350 which are unbranched, branched or cyclic, and which are optionally substituted and optionally contain heteroatoms.
PS3. The precursor to a polyurethane/urea nanocomposite according to embodiment PS2 wherein each R¹ is independently selected from -H, -CH₃, and -C₂H₅.
PS4. The precursor to a polyurethane/urea nanocomposite according to embodiment PS2 wherein each R¹ is independently selected from -CH₃, and -C₂H₅.
PS5. The precursor to a polyurethane/urea nanocomposite according to embodiment PS2 wherein each R¹ is -CH₃.
PS6. The precursor to a polyurethane/urea nanocomposite according to embodiment PS2 wherein each R¹ is -C₂H₅.
PS7. The precursor to a polyurethane/urea nanocomposite according to any of embodiments PS1-PS2 wherein the linking group is a moiety according to Formula Ib: 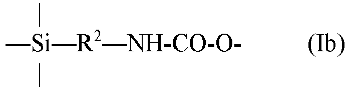 wherein the urethane group of the linking group is covalently bound to the second polyol;
   wherein each open valence of the silicon atom of the linking group is bound to a hydroxyl group (-OH) or is covalently bound to the surface of the silicon carbide core through an oxygen atom, chosen independently for each open valence; and
   wherein R² is selected from bivalent aliphatic or aromatic groups having a molecular weight of between 13 and 350 which are unbranched, branched or cyclic, and which are optionally substituted and optionally contain heteroatoms.
PS8. The precursor to a polyurethane/urea nanocomposite according to any of embodiments PS1-PS7 wherein R² is selected from bivalent aliphatic groups.
PS9. The precursor to a polyurethane/urea nanocomposite according to any of embodiments PS1-PS7 wherein R² is selected from bivalent aromatic groups.
PS10. The precursor to a polyurethane/urea nanocomposite according to any of embodiments PS1-PS8 wherein R² is selected from bivalent unbranched groups.
PS11. The precursor to a polyurethane/urea nanocomposite according to any of embodiments PS1-PS8 wherein R² is selected from bivalent branched groups.
PS12. The precursor to a polyurethane/urea nanocomposite according to any of embodiments PS1-PS9 wherein R² is selected from bivalent cyclic groups.
PS13. The precursor to a polyurethane/urea nanocomposite according to any of embodiments PS1-PS12 wherein R² is selected from bivalent groups which contain heteroatoms.
PS14. The precursor to a polyurethane/urea nanocomposite according to any of embodiments PS1-PS12 wherein R² is selected from bivalent groups which contain no heteroatoms.
PS15. The precursor to a polyurethane/urea nanocomposite according to any of embodiments PS1-PS14 wherein R² is selected from bivalent groups which are substituted.
PS16. The precursor to a polyurethane/urea nanocomposite according to any of embodiments PS1-PS14 wherein R² is selected from bivalent groups which are not substituted.
PS17. The precursor to a polyurethane/urea nanocomposite according to any of embodiments PS1-PS16 wherein R² is selected from bivalent groups having a molecular weight of greater than 27.
PS18. The precursor to a polyurethane/urea nanocomposite according to any of embodiments PS1-PS16 wherein R² is selected from bivalent groups having a molecular weight of greater than 41.
PS19. The precursor to a polyurethane/urea nanocomposite according to any of embodiments PS1-PS18 wherein R² is selected from bivalent groups having a molecular weight of less than 290.
PS20. The precursor to a polyurethane/urea nanocomposite according to any of embodiments PS1-PS18 wherein R² is selected from bivalent groups having a molecular weight of less than 190.
PS21. The precursor to a polyurethane/urea nanocomposite according to any of embodiments PS1-PS18 wherein R² is selected from bivalent groups having a molecular weight of less than 140.
PS22. The precursor to a polyurethane/urea nanocomposite according to any of embodiments PS1-PS18 wherein R² is selected from bivalent groups having a molecular weight of less than 90.
PS23. The precursor to a polyurethane/urea nanocomposite according to any of embodiments PS1-PS18 wherein R² is selected from bivalent groups having a molecular weight of less than 74.
PS24. The precursor to a polyurethane/urea nanocomposite according to any of embodiments PS1-PS18 wherein R² is selected from bivalent groups having a molecular weight of less than 58.
PS25. The precursor to a polyurethane/urea nanocomposite according to any of embodiments PS1-PS18 wherein R² is selected from bivalent groups having a molecular weight of less than 44.
PSS1. The precursor to a polyurethane/urea nanocomposite according to any of embodiments PS1-PS25 wherein the surface modified silicon carbide nanoparticle additionally comprises a second surface modification group derived from a second surface modifying agent, wherein the second surface modification group is covalently bound to the surface of the silicon carbide core and not covalently bound to any polyol.
PSS2. The precursor to a polyurethane/urea nanocomposite according to embodiment PSS1 wherein the second surface modification group is derived from a second surface modifying agent according to Formula IIa:

   (R³O)₃-Si-R⁴ (IIa)

   wherein each R³ is independently selected from -H, -CH₃, -C₂H₅, -C₃H₇, -C₄H₉, and -C₅H₁₁; and
   wherein R⁴ is selected from aliphatic or aromatic groups having a molecular weight of between 14 and 350 which are unbranched, branched or cyclic, and which are optionally substituted and optionally contain heteroatoms.
PSS3. The precursor to a polyurethane/urea nanocomposite according to embodiment PSS2 wherein each R³ is independently selected from -H, -CH₃, and -C₂H₅.
PSS4. The precursor to a polyurethane/urea nanocomposite according to embodiment PSS2 wherein each R³ is independently selected from -CH₃, and -C₂H₅.
PSS5. The precursor to a polyurethane/urea nanocomposite according to embodiment PSS2 wherein each R³ is -CH₃.
PSS6. The precursor to a polyurethane/urea nanocomposite according to embodiment PSS2 wherein each R³ is -C₂H₅.
PSS7. The precursor to a polyurethane/urea nanocomposite according to any of embodiments PSS1-PSS2 wherein the second surface modification group is a moiety according to Formula IIb: 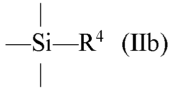
   wherein each open valence of the silicon atom of the second surface modification group is bound to a hydroxyl group (-OH) or is covalently bound to the surface of the silicon carbide core through an oxygen atom, chosen independently for each open valence; and
   wherein R⁴ is selected from aliphatic or aromatic groups having a molecular weight of between 13 and 350 which are unbranched, branched or cyclic, and which are optionally substituted and optionally contain heteroatoms.
PSS8. The precursor to a polyurethane/urea nanocomposite according to any of embodiments PSS1-PSS7 wherein R⁴ is selected from aliphatic groups.
PSS9. The precursor to a polyurethane/urea nanocomposite according to any of embodiments PSS1-PSS7 wherein R⁴ is selected from aromatic groups.
PSS10.The precursor to a polyurethane/urea nanocomposite according to any of embodiments PSS1-PSS8 wherein R⁴ is selected from unbranched groups.
PSS11.The precursor to a polyurethane/urea nanocomposite according to any of embodiments PSS1-PSS8 wherein R⁴ is selected from branched groups.
PSS12.The precursor to a polyurethane/urea nanocomposite according to any of embodiments PSS1-PSS9 wherein R⁴ is selected from cyclic groups.
PSS13.The precursor to a polyurethane/urea nanocomposite according to any of embodiments PSS1-PSS12 wherein R⁴ is selected from groups which contain heteroatoms.
PSS14.The precursor to a polyurethane/urea nanocomposite according to any of embodiments PSS1-PSS12 wherein R⁴ is selected from groups which contain no heteroatoms.
PSS15.The precursor to a polyurethane/urea nanocomposite according to any of embodiments PSS1-PSS14 wherein R⁴ is selected from groups which are substituted.
PSS16.The precursor to a polyurethane/urea nanocomposite according to any of embodiments PSS1-PSS14 wherein R⁴ is selected from groups which are not substituted.
PSS17.The precursor to a polyurethane/urea nanocomposite according to any of embodiments PSS1-PSS16 wherein R⁴ is selected from groups having a molecular weight of greater than 27.
PSS18.The precursor to a polyurethane/urea nanocomposite according to any of embodiments PSS1-PSS16 wherein R⁴ is selected from groups having a molecular weight of greater than 41.
PSS19.The precursor to a polyurethane/urea nanocomposite according to any of embodiments PSS1-PSS18 wherein R⁴ is selected from groups having a molecular weight of less than 290.
PSS20.The precursor to a polyurethane/urea nanocomposite according to any of embodiments PSS1-PSS18 wherein R⁴ is selected from groups having a molecular weight of less than 190.
PSS21.The precursor to a polyurethane/urea nanocomposite according to any of embodiments PSS1-PSS18 wherein R⁴ is selected from groups having a molecular weight of less than 140.
PSS22.The precursor to a polyurethane/urea nanocomposite according to any of embodiments PSS1-PSS18 wherein R⁴ is selected from groups having a molecular weight of less than 90.
PSS23.The precursor to a polyurethane/urea nanocomposite according to any of embodiments PSS1-PSS18 wherein R⁴ is selected from groups having a molecular weight of less than 74.
PSS24.The precursor to a polyurethane/urea nanocomposite according to any of embodiments PSS1-PSS18 wherein R⁴ is selected from groups having a molecular weight of less than 58.
PSS25.The precursor to a polyurethane/urea nanocomposite according to any of embodiments PSS1-PSS18 wherein R⁴ is selected from groups having a molecular weight of less than 44.
PP1. The precursor to a polyurethane/urea nanocomposite according to any of embodiments PS1-PS25 or PSS1-PSS25 wherein the second polyol has an average molecular weight of greater than 350.
PP2. The precursor to a polyurethane/urea nanocomposite according to any of embodiments PS1-PS25, PSS1-PSS25 or PP1 wherein the second polyol has an average molecular weight of less than 3500.
PP3. The precursor to a polyurethane/urea nanocomposite according to any of embodiments PS1-PS25, PSS1-PSS25 or PP1-PP2 wherein the second polyol is selected from the group consisting of: polyether polyols, polycaprolactone polyols, polyester polyols, and polybutadiene based polyols.
PP4. The precursor to a polyurethane/urea nanocomposite according to any of embodiments PS1-PS25, PSS1-PSS25 or PP1-PP2 wherein the second polyol is selected from the group consisting of: polyether polyols.
PP5. The precursor to a polyurethane/urea nanocomposite according to any of embodiments PS1-PS25, PSS1-PSS25 or PP1-PP2 wherein the second polyol is a polypropylene glycol.
PP6. The precursor to a polyurethane/urea nanocomposite according to any of embodiments PS1-PS25, PSS1-PSS25 or PP1-PP2 wherein the second polyol is a polyethylene glycol.
PP7. The precursor to a polyurethane/urea nanocomposite according to any of embodiments PP1-PP6 wherein the second polyol has an average molecular weight of greater than 450.
PP8. The precursor to a polyurethane/urea nanocomposite according to any of embodiments PP1-PP6 wherein the second polyol has an average molecular weight of greater than 600.
PP9. The precursor to a polyurethane/urea nanocomposite according to any of embodiments PP1-PP6 wherein the second polyol has an average molecular weight of greater than 950.
PP10. The precursor to a polyurethane/urea nanocomposite according to any of embodiments PP1-PP9 wherein the second polyol has an average molecular weight of less than 2500.
PP11. The precursor to a polyurethane/urea nanocomposite according to any of embodiments PP1-PP9 wherein the second polyol has an average molecular weight of less than 1500.
PP12. The precursor to a polyurethane/urea nanocomposite according to any of embodiments PS1-PS25, PSS1-PSS25 or PP1-PP11 wherein the second polyol is the same polyol as the first polyol.
PP13. The precursor to a polyurethane/urea nanocomposite according to any of embodiments PS1-PS25, PSS1-PSS25 or PP1-PP11 wherein the second polyol is a different polyol from the first polyol.
PP14. The precursor to a polyurethane/urea nanocomposite according to any of embodiments P1-P16, PS1-PS25, PSS1-PSS25 or PP1-PP13 wherein the first polyol has an average molecular weight of greater than 350.
PP15. The precursor to a polyurethane/urea nanocomposite according to any of embodiments P1-P16, PS1-PS25, PSS1-PSS25 or PP1-PP14 wherein the first polyol has an average molecular weight of less than 3500.
PP16. The precursor to a polyurethane/urea nanocomposite according to any of embodiments P1-P16, PS1-PS25, PSS1-PSS25 or PP1-PP15 wherein the first polyol is a polyether polyol. wherein the first polyol is selected from the group consisting of: polyether polyols, polycaprolactone polyols, polyester polyols, and polybutadiene based polyols.
PP17. The precursor to a polyurethane/urea nanocomposite according to any of embodiments P1-P16, PS1-PS25, PSS1-PSS25 or PP1-PP15 wherein the first polyol is selected from the group consisting of: polyether polyols.
PP18. The precursor to a polyurethane/urea nanocomposite according to any of embodiments P1-P16, PS1-PS25, PSS1-PSS25 or PP1-PP15 wherein the first polyol is a polypropylene glycol.
PP19. The precursor to a polyurethane/urea nanocomposite according to any of embodiments P1-P16, PS1-PS25, PSS1-PSS25 or PP1-PP15 wherein the first polyol is a polyethylene glycol.
PP20. The precursor to a polyurethane/urea nanocomposite according to any of embodiments PP11-PP19 wherein the first polyol has an average molecular weight of greater than 450.
PP21. The precursor to a polyurethane/urea nanocomposite according to any of embodiments PP11-PP19 wherein the first polyol has an average molecular weight of greater than 600.
PP22. The precursor to a polyurethane/urea nanocomposite according to any of embodiments PP11-PP19 wherein the first polyol has an average molecular weight of greater than 950.
PP23. The precursor to a polyurethane/urea nanocomposite according to any of embodiments PP11-PP22 wherein the first polyol has an average molecular weight of less than 2500.
PP24. The precursor to a polyurethane/urea nanocomposite according to any of embodiments PP11-PP22 wherein the first polyol has an average molecular weight of less than 1500.
PB1. The precursor to a polyurethane/urea nanocomposite according to any of embodiments P1-P16, PS1-PS25, PSS1-PSS25, or PP1-PP18 additionally comprising:
   c) a polyisocyanate dispersed within the first polyol.
PB2. The precursor to a polyurethane/urea nanocomposite according to any of embodiments P1-P16, PS1-PS25, PSS1-PSS25 or PP1-PP18 additionally comprising:
   c) a polyisocyanate dispersed within the first polyol and
   d) a polyurethane/urea polymer which includes crosslinkable acrylate groups dispersed within the first polyol.
MPB1. A method of making a polyurethane/urea nanocomposite, the method comprising the steps of:
   f) providing a precursor to a polyurethane/urea nanocomposite according to embodiment PB1;
   g) reacting the polyisocyanate with the polyols in the precursor to form a polyurethane/urea nanocomposite.
MPB2. A method of making a polyurethane/urea nanocomposite, the method comprising the steps of:
   h) applying a precursor to a polyurethane/urea nanocomposite according to embodiment PB1 to a surface;
   i) reacting the polyisocyanate with the polyols in the precursor to form a polyurethane/urea nanocomposite.
MPB3. The method according to embodiment MPB2 wherein the step of applying a precursor to a polyurethane/urea nanocomposite according to embodiment PB1 to a surface comprises spraying a precursor to a polyurethane/urea nanocomposite according to embodiment PB1 on a surface.
MPB4. The method according to embodiment MPB2 wherein the step of applying a precursor to a polyurethane/urea nanocomposite according to embodiment PB1 to a surface comprises brushing a precursor to a polyurethane/urea nanocomposite according to embodiment PB1 on a surface.
MPB5. A method of making a polyurethane/urea nanocomposite, the method comprising the steps of:
   j) providing a precursor to a polyurethane/urea nanocomposite according to embodiment PB2;
   k) reacting the polyisocyanate with the polyols in the precursor to form a polyurethane/urea nanocomposite.
NB1. The polyurethane/urea nanocomposite according to any of embodiments N1-N45, S1-S25 or SS1-SS25 additionally comprising:
   e) a polyurethane/urea polymer which includes crosslinkable acrylate groups dispersed within the nanocomposite.
MNB1. A method of making a cured article comprising the steps of:
   w) providing a polyurethane/urea nanocomposite according to embodiment NB1; and
   y) crosslinking the crosslinkable acrylate groups.
MNB2. The method according to embodiment MNB1 additionally comprising the step of:
   x) shaping the polyurethane/urea nanocomposite prior to step y).
MNB3. The method according to embodiment MNB1 or MNB2 wherein the step of crosslinking the crosslinkable acrylate groups comprises application of e-beam radiation.
MNB4. The method according to embodiment MNB1 or MNB2 wherein the step of crosslinking the crosslinkable acrylate groups comprises application of UV radiation.
MNB5. The method according to any of embodiments MNB1-MNB4 wherein the step of shaping the polyurethane/urea nanocomposite comprises shaping the polyurethane/urea nanocomposite into a film.
MNB6. The method according to any of embodiments MNB1-MNB4 wherein the step of shaping the polyurethane/urea nanocomposite comprises shaping the polyurethane/urea nanocomposite into a film bearing a repeating pattern of ridges.
MNB7. The method according to any of embodiments MNB1-MNB4 wherein the step of shaping the polyurethane/urea nanocomposite comprises shaping the polyurethane/urea nanocomposite into a film bearing a repeating pattern of elevations.
MNB8. The method according to any of embodiments MNB1-MNB4 wherein the step of shaping the polyurethane/urea nanocomposite comprises shaping the polyurethane/urea nanocomposite into a film bearing a repeating pattern of indentations.
MNB9. The method according to any of embodiments MNB1-MNB8 wherein the step of shaping the polyurethane/urea nanocomposite comprises shaping the polyurethane/urea nanocomposite into a conformal film bearing features which conform to those of an object to be covered by the film.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Sigma-Aldrich Company, St. Louis, Missouri, or may be synthesized by known methods. Unless otherwise reported, all ratios are by weight percent.

The following abbreviations are used to describe the examples:
- °F:: degrees Fahrenheit
- °C:: degrees Centigrade
- cm:: centimeters
- g/m²:: grams per square meter
- Kg:: kilogram
- Kmph:: kilometers per hour
- KPa:: kiloPascal
- KV:: kilovolt
- mg:: milligrams
- mil:: 10⁻³ inches
- µm:: micrometers
- mm:: millimeters
- mph:: miles per hour
- MRAD:: megarad
- nm:: nanometer
- psi:: pounds per square inch
- rpm:: revolutions per minute
- SiC:: silicon carbide
- TGA:: thermogravimetric analysis
- UV:: ultraviolet
- W/mK:: Watts per meter-Kelvin

"1M2P" refers to 1-methoxy-2-propanol, obtained from Alfa Aesar, Ward Hill, Massachusetts.

"AF-3109" refers to a structural adhesive film, available under the trade designation "SCOTCH-WELD STRUCTURAL ADHESIVE FILM AF-3109-2U, 0.035 WEIGHT", from 3M Company.

"BDO" refers to 1,4-butanediol, obtained from Alfa Aesar, Ward Hill, Massachusetts.

"CN9004" refers to a difunctional aliphatic urethane acrylate oligomer, obtained under the trade designation "CN9004" from Sartomer Americas, Exton, Pennsylvania.

"DBTDL" refers to dibutyltin dilaurate, obtained under the trade designation "DABCO T-12" from Air Products & Chemicals, Inc., Allentown, Pennsylvania.

"H12MDI" refers to dicyclohexylmethane-4,4'diisocyanate, obtained under the trade designation "DESMODUR W" Bayer Material Science, LLC, Pittsburgh, Pennsylvania.

"SC-EA" refers to a 0.7 µm mean particle size green silicon carbide, obtained under the trade designation "GREEN SILICON CARBIDE - 0.7 □m" from Electro Abrasives, LLC, Buffalo, New York.

"SC-3M" refers to a grade P1500 silicon carbide, obtained under the trade designation "E-ABRASIC P1500" from 3M Deutschland, GmbH, Kempten, Germany.

"T-1000" refers to polytetramethylene ether glycol, having an average molecular weight of 1,000, obtained under the trade designation "TERATHANE 1000" from Invista S.ar.L., Wichita, Kansas.

"TESPI" refers to 3-triethoxysilylpropylisocyanate, obtained from Sigma-Aldrich Company.

"TMPS" refers to trimethoxypropylsilane, obtained from Alfa Aesar.

"TV-571" refers to a UV absorber, 2-(2H-benzotriazol-2-yl)-6-dodecyl-4-methylphenol, obtained under the trade designation "TINUVIN 571" from BASF Corporation, Florham Park, New Jersey.

"TV-765" refers to a UV absorber blend of Bis(1,2,2,6,6-pentamethyl-4-piperidyl) sebacate and methyl 1,2,2,6,6- pentamethyl-4-piperidyl sebacate, obtained under the trade designation "TINUVIN 765" from BASF Corporation.

"TV-1010" refers to a UV absorber, tetrakis[methylene(3,5-di-tert-butyl-4-hydroxy hydrocinnamate)]methane, obtained under the trade designation "TINUVIN 1010" from BASF Corporation.

### Test Methods

Examples of the invention and Comparatives were evaluated as follows.

### Sand Erosion Test

The polyurethane film sample was applied to a 3 by 2.5 inch (7.62 by 6.35 cm) aluminum panel using "ADHESIVE TRANSFER TAPE 765" from 3M Company, and weighed. This panel assembly was then attached to a bracket and positioned at a distance of 3 inches (7.62 cm), and an angle of 30 degrees, to a sand blast gun, model "ATLAS SBC 420" obtained from Greg Smith Equipment Co., Indianapolis. The tape sample was then sand blasted with 4 Kg of 46 Grit (355 µm) aluminum oxide, in 2 Kg increments, at 70 psi (482.6 KPa). The panel assembly was removed from the bracket, lightly brushed to remove residual blast media, reweighed, and the loss in mass from the sand blasting recorded.

### Rain Erosion Test

The polyurethane film sample was applied to a glass fiber composite airfoil substrate by vacuum bag curing using AF3109-2U epoxy film adhesive, with an 8 g/m² polyester matte scrim added to control the bond line thickness. The film was bonded under full vacuum for 60 minutes at 180°F (82.2°C), followed by 90 minutes at 250°F (121.1°C). The bonded assembly was then subjected to the United States Air Force Research Laboratory (USAF-RL) Rain Erosion Test Protocol, Version July 2006. Whirling arm tests were conducted at 500 mph (800 Kmph), 1 inch (2.52 cm) per hour rainfall, with approximately 2 mm raindrops. The time taken to erode through the film sample, and the extent of the erosion, were recorded.

### Apparent Thermal Conductivity

Apparent Thermal Conductivity of the polyurethane film was measured according to ASTM D5470, wherein the film was sandwiched between separate heating and cooling elements. The former was supplied with 12.21 volts and 0.22 amperes, the latter was maintained at 20°C.

### Example 1

### a. Functionalized SiC/Polyglycol Dispersion

The P1500 grade silicon carbide SC-3M was milled to a 20% by weight aqueous ammonia suspension, having an approximate 700 nm mean particle size, using an attritor type mill with 0.5 to 2.00 mm ceramic beads.

A polyol silane was prepared by mixing 80 grams T-1000 and 35 grams dried ethyl acetate in a glass flask at 21°C. 9.9 grams TESPI was slowly added, followed by 4 drops DBTDL. The mixture was stirred for 16 hours whilst maintaining the temperature below 40°C. The ethyl acetate was then removed by means of a Buchi rotoevaporator immersed in an oil bath at between 60 - 65°C.

423 grams of the milled silicon carbide suspension was added to a 2 liter 3-necked flask equipped with a condenser, stirrer, thermowatch and thermometer. Whilst stirring moderately at 21°C, the pH was adjusted to between 9.5 - 10.0 using concentrated ammonium hydroxide. The mixture was then heated to 60°C and stirred for one hour. A pre-mix of 423 grams 1M2P and 8.1 grams of the polyol silane was slowly added to the flask over approximately 10 minutes, after which the temperature was increased to between 90 - 95°C and the mixture stirred for one hour. 0.6 grams TMPS was added and stirring continued for an additional 19 hours at this temperature. The reaction mixture was allowed to cool to 21°C, transferred to another flask, then rinsed with 240 mL deionized water in order to transfer residual functionalized silicon carbide suspension from the reaction flask.

The above process was repeated, wherein the two batches were combined, resulting in a functionalized silicon carbide suspension having 15.1% by weight solids.

1520 grams of the functionalized silicon carbide suspension was homogeneously mixed with 90 grams T-1000 in a glass jar equipped with a stirrer and a vacuum evaporator. The jar was immersed in an oil bath at approximately 80°C and vacuum applied until approximately 90% of the solvents had been removed. The oil bath temperature was then increased to 125°C and vacuum and stirring maintained until the remaining solvents were removed, approximately 45 minutes. TGA determined the silicon carbide in the dispersion to be 71.2% by weight.

### b. Functionalized SiC Polyurethane Film

21.0 grams of the functionalized silicon carbide/polyglycol dispersion was transferred to a 100 gram capacity polyethylene mixing cup, followed by 2.66 grams H12MDI, 1.85 grams T-1000, 0.86 grams CN9004, 0.12 grams BDO, 0.22 grams TV-571, 0.11 TV-765 and 0.11 grams TV-1010. This polyurethane precursor composition was transferred to an oven set to 180°F (82.2°C) for 10 minutes. The cup was removed from the oven, and the precursor composition homogeneously dispersed at 2,700 rpm for 2 minutes using a model "HAUSCHILD DAC 400 FVZ SPEEDMIXER" from FlackTek, Inc., Landrum, South Carolina. 0.03 grams DBTDL was added and mixing continued for another 2 minutes. The cup was returned to the oven and the mixture cured for 4 hours at 180°F (82.2°C), after which the resultant silicon carbide polyurethane dispersion was transferred to between two paper liners and hot pressed into a 20 mil (0.51 mm) film at 280°F (137.7°C). Each face of the film were then irradiated at 6 MRAD and 300 KV using a model "CB300 ELECTROCURTAIN" e-beam apparatus from Energy Sciences, Inc., Wilmington, Delaware. The silicon carbide content in the polyurethane film was calculated to be 55.5% by weight.

### Comparative A

A non-functionalized silicon carbide/polyglycol dispersion was prepared by homogeneously mixing 200 grams green silicon carbide SC-EA with 77 grams T-1000 in the speed mixer for 10 minutes at 2,500 rpm and at 21°C. The resultant silicon carbide/polyglycol dispersion was determined by TGA to be 72.1% silicon carbide by weight. A silicon carbide polyurethane film was then prepared as generally described in Example 1, according to the precursor composition listed in Table 1. The silicon carbide content in the polyurethane film was calculated to be 55.2% by weight.

**TABLE 1**

| **Component** | **Polyurethane Precursor Composition (% By Weight)** | |
|---|---|---|
| | **Example 1** | **Comparative A** |
| Functionalized SiC/Polyglycol Dispersion | 77.88 | 0 |
| Non-Functionalized SiC/Polyglycol Dispersion | 0 | 76.68 |
| H12MDI | 9.86 | 10.13 |
| T-1000 | 6.86 | 8.03 |
| CN9004 | 3.20 | 3.21 |
| BDO | 0.45 | 0.38 |
| TV-571 | 0.82 | 0.67 |
| TV-765 | 0.41 | 0.43 |
| TV-1010 | 0.41 | 0.43 |
| DBTDL | 0.11 | 0.04 |

Thermal conductivity and sand erosion test results are listed in Table 2.

**TABLE 2**

| **Polyurethane Film Sample** | **Apparent Thermal Conductivity (W/mK)** | **Sand Erosion (grams)** |
|---|---|---|
| Example 1 | 0.89 | 0.123 |
| Comparative A | 0.88 | 0.125 |

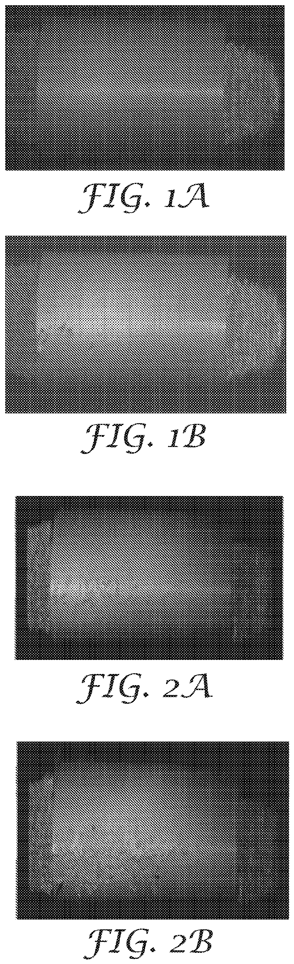

Rain erosion tests were run until failure, i.e., until the film was worn away to the point that the substrate beneath the film became visible. For Example 1, failure occurred at 51 minutes whereas for Comparative A failure occurred at 31 minutes. In addition to the longer duration, Example 1 also exhibited significantly less damage than the Comparative, as shown by Figs. 1A and 1B at 20 and 51 minutes, and Figs. 2A and 2B, at 20 and 31 minutes, respectively.

Various modifications and alterations of this disclosure will become apparent to those skilled in the art without departing from the scope and principles of this disclosure, and it should be understood that this disclosure is not to be unduly limited to the illustrative embodiments set forth hereinabove.

## Claims

1. A polyurethane/urea nanocomposite comprising:
a) a polyurethane/urea polymer matrix, and
b) surface modified silicon carbide nanoparticles dispersed within and covalently bound to a polyurethane/urea polymer comprising the polyurethane/urea polymer matrix
wherein the surface modified silicon carbide nanoparticle comprises a silicon carbide core and a linking group derived from a first surface modifying agent, wherein the linking group is covalently bound to the surface of the silicon carbide core and covalently bound to the polyurethane/urea polymer, and wherein the linking group is derived from a first surface modifying agent according to Formula la:
(R¹O)₃-Si-R²-N=C=O (Ia)
wherein each R¹ is independently selected from -H, -CH₃, -C₂H₅, -C₃H₇, -C₄H₉, and C₅H₁₁; and
wherein R² is selected from bivalent aliphatic or aromatic groups having a molecular weight of between 14 and 350 which are unbranched, branched or cyclic, and which are optionally substituted and optionally contain heteroatoms.

2. The polyurethane/urea nanocomposite according to claim 1 wherein the surface modified silicon carbide nanoparticles comprise silicon carbide cores having a number average particle size of between 14.0 and 14.00x10² nanometers (nm).

3. The polyurethane/urea nanocomposite according to any of the preceding claims wherein the polyurethane/urea polymer comprises a semi-IPN of a crosslinked polyurethane/urea polymer and an uncrosslinked polyurethane/urea polymer.

4. The polyurethane/urea nanocomposite according to any of the preceding claims wherein the polymer content of the polyurethane/urea polymer matrix consists of a semi-IPN of a crosslinked polyurethane/urea polymer and an uncrosslinked polyurethane/urea polymer.

5. The polyurethane/urea nanocomposite according to any of claims 1-4 wherein the linking group is a moiety according to Formula Ib: 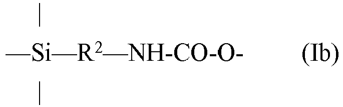 wherein the urethane group of the linking group is covalently bound to the polyurethane/urea polymer;
wherein each open valence of the silicon atom of the linking group is bound to a hydroxyl group (-OH) or is covalently bound to the surface of the silicon carbide core through an oxygen atom, chosen independently for each open valence; and
wherein R² is selected from bivalent aliphatic or aromatic groups having a molecular weight of between 13 and 350 which are unbranched, branched or cyclic, and which are optionally substituted and optionally contain heteroatoms.

6. An erosion resistant film comprising a film of the polyurethane/urea nanocomposite according to any of claims 1-5.

7. A precursor to a polyurethane/urea nanocomposite comprising:
a) a first polyol, and
b) surface modified silicon carbide nanoparticles dispersed within the first polyol
wherein the surface modified silicon carbide nanoparticle comprises a silicon carbide core and a linking group derived from a first surface modifying agent, wherein the linking group is covalently bound to the surface of the silicon carbide core and covalently bound to a second polyol, and wherein the linking group is derived from a first surface modifying agent according to Formula la:
(R¹I)₃-Si-R²-N=C=O (Ia)
wherein each R¹ is independently selected from -H, -CH₃, -C₂H₅, -C₃H₇, -C₄H₉, and C₅H₁₁; and
wherein R² is selected from bivalent aliphatic or aromatic groups having a molecular weight of between 14 and 350 which are unbranched, branched or cyclic, and which are optionally substituted and optionally contain heteroatoms.

8. The precursor to a polyurethane/urea nanocomposite according to claim 7 additionally comprising:
c) a polyisocyanate dispersed within the first polyol.

9. The precursor to a polyurethane/urea nanocomposite according to claim 7 additionally comprising:
c) a polyisocyanate dispersed within the first polyol and
d) a polyurethane/urea polymer which includes crosslinkable acrylate groups dispersed within the first polyol.

10. A method of making a polyurethane/urea nanocomposite, the method comprising the steps of:
f) providing a precursor to a polyurethane/urea nanocomposite according to claim 8;
g) reacting the polyisocyanate with the polyols in the precursor to form a polyurethane/urea nanocomposite.

11. A method of making a polyurethane/urea nanocomposite, the method comprising the steps of:
h) applying a precursor to a polyurethane/urea nanocomposite according to claim 8 to a surface;
i) reacting the polyisocyanate with the polyols in the precursor to form a polyurethane/urea nanocomposite.

12. The polyurethane/urea nanocomposite according to any of claims 1-5 additionally comprising:
e) a polyurethane/urea polymer which includes crosslinkable acrylate groups dispersed within the nanocomposite.

13. A method of making a cured article comprising the steps of:
w) providing a polyurethane/urea nanocomposite according to claim 12; and
y) crosslinking the crosslinkable acrylate groups.

## Patentansprüche

1. Ein Polyurethan/Harnstoff-Nanoverbundwerkstoff, umfassend:
a) eine Polyurethan/Harnstoff-Polymermatrix, und
b) oberflächenmodifizierte Siliciumcarbid-Nanoteilchen, die innerhalb eines Polyurethan/Harnstoff-Polymers, umfassend die Polyurethan/Harnstoff-Polymermatrix, dispergiert sind und kovalent daran gebunden sind,
wobei das oberflächenmodifizierte Siliciumcarbid-Nanoteilchen einen Siliciumcarbidkern und eine Verknüpfungsgruppe, die von einem ersten oberflächenmodifizierenden Mittel abgeleitet ist, umfasst, wobei die Verknüpfungsgruppe kovalent an die Oberfläche des Siliciumcarbidkerns gebunden ist und kovalent an das Polyurethan/Harnstoff-Polymer gebunden ist und wobei die Verknüpfungsgruppe von einem ersten oberflächenmodifizierenden Mittel gemäß der folgenden Formel la abgeleitet ist:
(R¹O)₃-Si-R²-N=C=O (Ia)
wobei jeder R¹ unabhängig ausgewählt ist aus -H, -CH₃, -C₂H₅, -C₃H₇, -C₄H₉ und -C₅H₁₁; und
wobei R² ausgewählt ist aus zweiwertigen aliphatischen oder aromatischen Gruppen mit einem Molekulargewicht zwischen 14 und 350, die unverzweigt, verzweigt oder cyclisch sind und die gegebenenfalls substituiert sind und gegebenenfalls Heteroatome enthalten.

2. Der Polyurethan/Harnstoff-Nanoverbundwerkstoff nach Anspruch 1, wobei die oberflächenmodifizierten Siliciumcarbid-Nanoteilchen Siliciumcarbidkerne mit einer zahlengemittelten Teilchengröße zwischen 14,0 und 14,00 × 10² Nanometern (nm) umfassen.

3. Der Polyurethan/Harnstoff-Nanoverbundwerkstoff nach einem der vorstehenden Ansprüche, wobei das Polyurethan/Harnstoff-Polymer ein semi-IPN aus einem vernetzten Polyurethan/Harnstoff-Polymer und einem unvernetzten Polyurethan/Harnstoff-Polymer umfasst.

4. Der Polyurethan/Harnstoff-Nanoverbundwerkstoff nach einem der vorstehenden Ansprüche, wobei der Polymeranteil der Polyurethan/Harnstoff-Polymermatrix aus einem semi-IPN aus einem vernetzten Polyurethan/Harnstoff-Polymer und einem unvernetzten Polyurethan/Harnstoff-Polymer besteht.

5. Der Polyurethan/Harnstoff-Nanoverbundwerkstoff nach einem der Ansprüche 1-4, wobei die Verknüpfungsgruppe ein Molekülteil gemäß der folgenden Formel Ib ist: 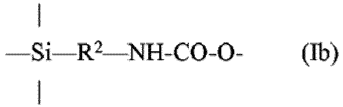 wobei die Urethangruppe der Verknüpfungsgruppe kovalent an das Polyurethan/Harnstoff-Polymer gebunden ist;
wobei jede offene Valenz des Siliciumatoms der Verknüpfungsgruppe an eine Hydroxylgruppe (-OH) gebunden ist oder über ein Sauerstoffatom, das unabhängig für jede offene Valenz ausgewählt wird, kovalent an die Oberfläche des Siliciumcarbidkerns gebunden ist; und
wobei R² ausgewählt ist aus zweiwertigen aliphatischen oder aromatischen Gruppen mit einem Molekulargewicht zwischen 13 und 350, die unverzweigt, verzweigt oder cyclisch sind und die gegebenenfalls substituiert sind und gegebenenfalls Heteroatome enthalten.

6. Eine erosionsbeständige Folie, umfassend eine Folie aus dem Polyurethan/Harnstoff-Nanoverbundwerkstoff nach einem der Ansprüche 1-5.

7. Ein Vorläufer eines Polyurethan/Harnstoff-Nanoverbundwerkstoffs, umfassend:
a) ein erstes Polyol, und
b) oberflächenmodifizierte Siliciumcarbid-Nanoteilchen, die innerhalb des ersten Polyols dispergiert sind,
wobei das oberflächenmodifizierte Siliciumcarbid-Nanoteilchen einen Siliciumcarbidkern und eine Verknüpfungsgruppe, die von einem ersten oberflächenmodifizierenden Mittel abgeleitet ist, umfasst, wobei die Verknüpfungsgruppe kovalent an die Oberfläche des Siliciumcarbidkerns gebunden ist und kovalent an ein zweites Polyol gebunden ist
und wobei die Verknüpfungsgruppe von einem ersten oberflächenmodifizierenden Mittel gemäß der folgenden Formel la abgeleitet ist:
(R¹O)₃-Si-R²-N=C=O (Ia)
wobei jeder R¹ unabhängig ausgewählt ist aus-H, -CH₃, -C₂H₅, -C₃H₇, -C₄H₉ und C₅H₁₁; und
wobei R² ausgewählt ist aus zweiwertigen aliphatischen oder aromatischen Gruppen mit einem Molekulargewicht zwischen 14 und 350, die unverzweigt, verzweigt oder cyclisch sind und die gegebenenfalls substituiert sind und gegebenenfalls Heteroatome enthalten.

8. Der Vorläufer eines Polyurethan/Harnstoff-Nanoverbundwerkstoffs nach Anspruch 7, zusätzlich umfassend:
c) ein innerhalb des ersten Polyols dispergiertes Polyisocyanat.

9. Der Vorläufer eines Polyurethan/Harnstoff-Nanoverbundwerkstoffs nach Anspruch 7, zusätzlich umfassend:
c) ein innerhalb des ersten Polyols dispergiertes Polyisocyanat und
d) ein Polyurethan/Harnstoff-Polymer, das vernetzbare Acrylatgruppen beinhaltet, die innerhalb des ersten Polyols dispergiert sind.

10. Ein Verfahren zum Herstellen eines Polyurethan/Harnstoff-Nanoverbundwerkstoffs, wobei das Verfahren die folgenden Schritte umfasst:
f) Bereitstellen eines Vorläufers eines Polyurethan/Harnstoff-Nanoverbundwerkstoffs nach Anspruch 8;
g) Umsetzen des Polyisocyanats mit den Polyolen in dem Vorläufer, um einen Polyurethan/Harnstoff-Nanoverbundwerkstoff zu bilden.

11. Ein Verfahren zum Herstellen eines Polyurethan/Harnstoff-Nanoverbundwerkstoffs, wobei das Verfahren die Schritte umfasst:
h) Aufbringen eines Vorläufers eines Polyurethan/Harnstoff-Nanoverbundwerkstoffs nach Anspruch 8 auf eine Oberfläche;
i) Umsetzen des Polyisocyanats mit den Polyolen in dem Vorläufer, um einen Polyurethan/Harnstoff-Nanoverbundwerkstoff zu bilden.

12. Der Polyurethan/Harnstoff-Nanoverbundwerkstoff nach einem der Ansprüche 1-5, zusätzlich umfassend:
e) ein Polyurethan/Harnstoff-Polymer, das vernetzbare Acrylatgruppen beinhaltet, die innerhalb des Nanoverbundwerkstoffs dispergiert sind.

13. Ein Verfahren zum Herstellen eines gehärteten Artikels, umfassend die Schritte:
w) Bereitstellen eines Polyurethan/Harnstoff-Nanoverbundwerkstoffs nach Anspruch 12; und
y) Vernetzen der vernetzbaren Acrylatgruppen.

## Revendications

1. Nanocomposite de polyuréthane/urée comprenant :
a) une matrice de polymère polyuréthane/urée, et
b) des nanoparticules de carbure de silicium, modifiées en surface, dispersées au sein d'un polymère polyuréthane/urée comprenant la matrice polymère polyuréthane/urée et liées par covalence à celui-ci
dans lequel la nanoparticule de carbure de silicium modifiée en surface comprend un noyau de carbure de silicium et un groupe de liaison dérivé d'un premier agent de modification de surface, le groupe de liaison étant lié de manière covalente à la surface du noyau de carbure de silicium et lié par covalence au polymère polyuréthane/urée, et le groupe de liaison étant dérivé d'un premier agent de modification de surface selon la formule la :
(R¹O)₃-Si-R²-N=C=O (Ia)
dans lequel chaque R¹ est indépendamment choisi parmi -H, -CH₃, -C₂H₅, -C₃H₇, -C₄H₉, et C₅H₁₁ ; et
dans lequel R² est choisi parmi des groupes aliphatiques ou aromatiques bivalents dont la masse moléculaire est située entre 14 et 350, qui sont non ramifiés, ramifiés ou cycliques, et qui sont éventuellement substitués et qui contiennent éventuellement des hétéroatomes.

2. Nanocomposite de polyuréthane/urée selon la revendication 1, dans lequel les nanoparticules de carbure de silicium modifiées en surface comprennent des noyaux de carbure de silicium dont la taille de particule moyenne en nombre est située entre 14,0 et 14,00 x 10² nanomètres (nm).

3. Nanocomposite de polyuréthane/urée selon l'une quelconque des revendications précédentes, dans lequel le polymère polyuréthane/urée comprend un semi-IPN d'un polymère polyuréthane/urée réticulé et d'un polymère polyuréthane/urée non réticulé.

4. Nanocomposite de polyuréthane/urée selon l'une quelconque des revendications précédentes, dans lequel la partie polymère de la matrice de polymère polyuréthane/urée est constituée d'un semi-IPN d'un polymère polyuréthane/urée réticulé et d'un polymère polyuréthane/urée non réticulé.

5. Nanocomposite de polyuréthane/urée selon l'une quelconque des revendications 1 à 4, dans lequel le groupe de liaison est un fragment selon la formule Ib : 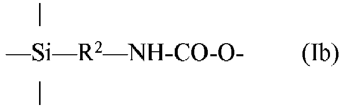 dans lequel le groupe uréthane du groupe de liaison est lié par covalence au polymère polyuréthane/urée;
dans lequel chaque valence ouverte de l'atome de silicium du groupe de liaison est liée à un groupe hydroxyle (-OH) ou est liée par covalence à la surface du noyau de carbure de silicium par l'intermédiaire d'un atome d'oxygène, choisi indépendamment pour chaque valence ouverte ; et
dans lequel R² est choisi parmi des groupes aliphatiques ou aromatiques bivalents dont la masse moléculaire est située entre 13 et 350, qui sont non ramifiés, ramifiés ou cycliques, qui sont éventuellement substitués et qui contiennent éventuellement des hétéroatomes.

6. Film résistant à l'érosion comprenant un film du nanocomposite de polyuréthane/urée selon l'une quelconque des revendications 1 à 5.

7. Précurseur d'un nanocomposite de polyuréthane/urée comprenant :
a) un premier polyol, et
b) des nanoparticules de carbure de silicium, modifiées en surface, dispersées dans le premier polyol
dans lequel la nanoparticule de carbure de silicium modifiée en surface comprend un noyau de carbure de silicium et un groupe de liaison dérivé d'un premier agent de modification de surface, le groupe de liaison étant lié de manière covalente à la surface du noyau de carbure de silicium et étant lié de manière covalente à un second polyol,
et dans lequel le groupe de liaison est dérivé d'un premier agent de modification de surface répondant à la formule la :
(R¹O)₃-Si-R²-N=C=O (Ia)
dans lequel chaque R¹ est indépendamment choisi parmi -H, -CH₃, -C₂H₅, -C₃H₇, -C₄H₉, et C₅H₁₁ ; et
dans lequel R² est choisi parmi des groupes aliphatiques ou aromatiques bivalents dont la masse moléculaire est située entre 14 et 350, qui sont non ramifiés, ramifiés ou cycliques, et qui sont éventuellement substitués et qui contiennent éventuellement des hétéroatomes.

8. Précurseur de nanocomposite de polyuréthane/urée selon la revendication 7, comprenant en outre :
c) un polyisocyanate dispersé dans le premier polyol.

9. Précurseur de nanocomposite de polyuréthane/urée selon la revendication 7, comprenant en outre :
c) un polyisocyanate dispersé dans le premier polyol et
d) un polymère polyuréthane/urée, qui inclut des groupes acrylate réticulables, dispersé dans le premier polyol.

10. Procédé de fabrication d'un nanocomposite de polyuréthane/urée, le procédé comprenant les étapes consistant à :
f) utiliser un précurseur de nanocomposite de polyuréthane/urée selon la revendication 8 ;
g) faire réagir le polyisocyanate avec les polyols dans le précurseur pour former un nanocomposite de polyuréthane/urée.

11. Procédé de fabrication d'un nanocomposite de polyuréthane/urée, le procédé comprenant les étapes consistant à :
h) appliquer un précurseur de nanocomposite de polyuréthane/urée selon la revendication 8 sur une surface ;
i) faire réagir le polyisocyanate avec les polyols dans le précurseur pour former un nanocomposite de polyuréthane/urée.

12. Nanocomposite de polyuréthane/urée selon l'une quelconque des revendications 1 à 5, comprenant en outre :
e) un polymère polyuréthane/urée, qui inclut des groupes acrylate réticulables, dispersé dans le nanocomposite.

13. Procédé de fabrication d'un article durci, comprenant les étapes consistant à :
w) fournir un nanocomposite de polyuréthane/urée selon la revendication 12 ; et
y) réticuler les groupes acrylate réticulables.
